(19) Europäisches Patentamt
European Patent Office
Office européen des brevets

(11) EP 3 230 414 B1

(12) # FASCICULE DE BREVET EUROPEEN

(45) Date de publication et mention de la délivrance du brevet:
**05.09.2018 Bulletin 2018/36**

(21) Numéro de dépôt: **15802138.6**

(22) Date de dépôt: **01.12.2015**

(51) Int Cl.:
***B01J 8/18*** *(2006.01)* ***B01J 8/26*** *(2006.01)*
***B01J 8/00*** *(2006.01)* ***C01B 3/38*** *(2006.01)*
***C01B 3/44*** *(2006.01)* ***F23C 10/01*** *(2006.01)*
***F23C 10/22*** *(2006.01)*

(86) Numéro de dépôt international:
**PCT/EP2015/078241**

(87) Numéro de publication internationale:
**WO 2016/091664 (16.06.2016 Gazette 2016/24)**

(54) **PROCEDE ET INSTALLATION DE COMBUSTION PAR OXYDO-RÉDUCTION EN BOUCLE CHIMIQUE D'UNE CHARGE HYDROCARBONEE GAZEUSE AVEC VAPORÉFORMAGE CATALYTIQUE INTERMEDIAIRE DE LA CHARGE**

VERFAHREN UND ANLAGE FÜR EINEN CHEMISCHEN REDOXKREISLAUF EINES KOHLENWASSERSTOFFGASES MIT EINER KATALYTISCHEN DAMPFREFORMIERUNG ALS ZWISCHENSCHRITT

METHOD AND INSTALLATION FOR COMBUSTION VIA REDOX CHEMICAL LOOP OF A HYDROCARBON GAS WITH INTERMEDIATE CATALYTIC STEAM REFORMING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462318**

(43) Date de publication de la demande:
**18.10.2017 Bulletin 2017/42**

(73) Titulaires:
- **IFP Energies nouvelles**
  **92500 Rueil-Malmaison (FR)**
- **Total Raffinage Chimie**
  **92400 Courbevoie (FR)**

(72) Inventeurs:
- **SOZINHO, Tiago**
  **69320 Feyzin (FR)**
- **YAZDANPANAH, Mahdi**
  **76600 Le Havre (FR)**
- **GUILLOU, Florent**
  **69360 Ternay (FR)**
- **FORRET, Ann**
  **69420 Longes (FR)**
- **BERTHOLIN, Stephane**
  **69630 Chaponost (FR)**
- **STAINTON, Hélène**
  **Beaumont, TX 77713 (US)**

(56) Documents cités:
**WO-A1-2014/162075** **FR-A1- 3 001 400**
**US-A1- 2011 303 875**

EP 3 230 414 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention concerne le domaine de la combustion d'hydrocarbures par oxydo-réduction en boucle chimique (CLC), et en particulier la combustion d'hydrocarbures gazeux tels que le méthane.

### Contexte général

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Dans un contexte de demande énergétique mondiale croissante, la capture du dioxyde de carbone ($CO_2$) en vue de sa séquestration constitue une voie incontournable pour limiter l'émission de gaz à effet de serre préjudiciable à l'environnement. Le procédé d'oxydo-réduction en boucle sur masse active, ou Chemical Looping Combustion (CLC) dans la terminologie anglo-saxonne, permet de produire de l'énergie à partir de combustibles hydrocarbonés tout en facilitant la capture du $CO_2$ émis lors de la combustion.

Le procédé CLC consiste à mettre en oeuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz jouant le rôle d'oxydant, permet d'oxyder la masse active. Cette réaction est fortement exothermique et développe généralement plus d'énergie que la combustion de la charge. Une seconde réaction de réduction de la masse active ainsi oxydée à l'aide d'un gaz réducteur issu de la charge hydrocarbonée permet ensuite d'obtenir une masse active réutilisable ainsi qu'un mélange gazeux comprenant essentiellement du $CO_2$ et de l'eau, voire du gaz de synthèse contenant de l'hydrogène ($H_2$) et du monoxyde d'azote (CO). Cette réaction est généralement endothermique. Cette technique permet donc d'isoler le $CO_2$ ou le gaz de synthèse dans un mélange gazeux pratiquement dépourvu d'oxygène et d'azote.

Le bilan de la combustion en boucle chimique, i.e. des deux réactions précédentes, est globalement exothermique et correspond au pouvoir calorifique de la charge traitée. Il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation.

Le brevet US 5 447 024 décrit par exemple un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

Le brevet US 2011/303875 divulgue un procédé de combustion en boucle pour la production de gaz de synthèse comprenant 3 zones réactionnelles. La masse active, passant alternativement de sa forme oxydée à sa forme réduite et inversement, décrit un cycle d'oxydo-réduction.

Ainsi, dans le réacteur de réduction, la masse active $M_xO_y$ est tout d'abord réduite à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange CO + $H_2$ selon les proportions utilisées.

$$C_nH_m + M_xO_y \rightarrow n\ CO_2 + m/2\ H_2O + M_xO_{y-2n-m/2} \qquad (1)$$

Dans le réacteur d'oxydation, la masse active est restaurée à son état oxydé $M_xO_y$ au contact de l'air selon la réaction (2), avant de retourner vers le premier réacteur.

$$M_xO_{y-2n-m/2} + (n+m/4)\ O_2 \rightarrow M_xO_y \qquad (2)$$

Dans les équations ci-dessus, M représente un métal.

L'efficacité du procédé de combustion en boucle chimique en lit fluidisé circulant repose dans une large mesure sur les propriétés physico-chimiques de la masse active d'oxydo-réduction.

La réactivité du ou des couples oxydo-réducteurs mis en jeu ainsi que la capacité de transfert d'oxygène associée sont des paramètres qui influent sur le dimensionnement des réacteurs et sur les vitesses de circulation des particules. La durée de vie des particules quant à elle dépend de la résistance mécanique des particules ainsi que de

leur stabilité chimique.

Afin d'obtenir des particules utilisables pour ce procédé, les particules mises en jeu sont généralement composées d'un couple oxydo-réducteur choisi parmi CuO/Cu, $Cu_2O$/Cu, NiO/Ni, $Fe_2O_3/Fe_3O_4$, FeO/Fe, $Fe_3O_4$/FeO, $MnO_2/Mn_2O_3$, $Mn_2O_3/Mn_3O_4$, $Mn_3O_4$/MnO, MnO/Mn, $Co_3O_4$/CoO, CoO/Co, ou une combinaison de plusieurs de ces couples oxydo-réducteurs, et parfois d'un liant apportant la stabilité physico-chimique nécessaire.

De manière générale, et en particulier dans le cas de la combustion d'une charge gazeuse de type gaz naturel, on vise généralement un niveau de conversion important des hydrocarbures, classiquement supérieur à 98%, tout en limitant le temps de séjour des réactifs dans les zones réactionnelles afin de conserver une taille des équipements réaliste. Ces contraintes imposent d'utiliser un couple oxydo-réducteur très réactif, ce qui réduit la sélection des matériaux envisageables.

Le couple NiO/Ni est souvent cité comme masse active de référence pour le procédé CLC pour ses capacités de transport d'oxygène et sa cinétique rapide de réduction, notamment en présence de méthane. Cependant un inconvénient majeur est que l'oxyde de nickel présente une toxicité importante, celui-ci étant classé comme substance CMR1 : Cancérigène, Mutagène ou toxique pour la Reproduction de classe 1, entrainant notamment des contraintes importantes sur le système de filtration des fumées. En outre, il présente un coût élevé. En effet, comme l'oxyde de nickel n'existe pas à l'état naturel de façon suffisamment concentrée pour pouvoir obtenir des propriétés intéressantes pour le procédé CLC, il est généralement utilisé de façon concentrée dans des particules de masse active synthétique dont le cout de fabrication est important.

Il faut noter qu'en plus du cout de fabrication, le coût de la masse active dans un procédé CLC doit prendre en compte le poste d'appoint en masse active qui peut devenir une part importante du coût opératoire, en raison d'une consommation continue de solide par attrition inévitable liée à la circulation du solide dans des réacteurs où les vitesses de gaz sont relativement élevées. Ainsi, le coût lié à la masse active sera particulièrement élevé pour des particules synthétiques, par opposition à des particules issues de certains minerais naturels qui peuvent être moins chers.

En effet, on connait par ailleurs l'utilisation de minerais naturels en tant que masse active pour le procédé CLC, tels que des minerais d'ilménite ou de manganèse, qui peuvent constituer une solution satisfaisante en termes de coût.

Cependant, l'utilisation de tels minerais est généralement moins bien adaptée à la combustion de charges gazeuses telles que le méthane qu'à la combustion de charges solides ou liquides, en termes de performance du procédé et du taux de conversion de la charge.

On connait également l'utilisation de mélanges d'oxydes métalliques naturels provenant de minerais avec de l'oxyde de nickel.

La demande de brevet WO 2014/068205 porte par exemple sur un procédé CLC dans lequel on utilise une masse active comprenant un minerai naturel de manganèse de type pyrolusite enrichi avec de l'oxyde de nickel, permettant notamment d'améliorer les performances du procédé CLC en termes de taux de conversion des charges hydrocarbonées. Cependant, un inconvénient majeur d'un tel procédé est que l'oxyde de nickel fait partie de la masse active qui circule dans la boucle chimique et produit des fines par le phénomène d'attrition. La présence de particules de nickel dans les fines est indésirable du fait de la toxicité de l'oxyde de nickel, ce qui limite la quantité d'oxyde de nickel pouvant être utilisée, et induit des contraintes importantes sur la filtration des effluents issus de la combustion.

Il existe ainsi un besoin de fournir un procédé CLC performant, notamment en terme de conversion de la charge, adapté au traitement d'une charge hydrocarbonée gazeuse, et qui peut mettre en oeuvre un matériau en tant que masse active oxydo-réductrice peu coûteux, et répondant aux normes environnementales en termes de toxicité et d'émissions réductrices.

## Résumé de l'invention

Pour répondre à ce besoin, et surmonter au moins en partie les inconvénients de l'art antérieur cités, les demandeurs proposent de réaliser une étape de reformage à la vapeur, aussi appelée vaporéformage, catalytique de la charge gazeuse entre deux étapes successives de combustion de la charge au contact du porteur d'oxygène. Le catalyseur de reformage est placé en lit fixe dans une zone de reformage intermédiaire à deux zones de réduction dans lesquelles sont réalisées les deux étapes de combustion de la charge au contact du porteur d'oxygène.

La première étape de combustion dans la première zone de réduction permet à la fois à un début de conversion de la charge mais également l'augmentation de la fraction de vapeur présente dans la charge, qui est ensuite introduite dans la zone catalytique de vaporéformage. La deuxième étape de combustion dans la seconde zone de réduction complète la combustion de la charge reformée qui comprend une part importante de gaz de synthèse produit lors du reformage.

La présente invention vise à atteindre un taux de conversion de la charge de l'ordre de 98 % ou plus. La mise en oeuvre d'une telle zone de vaporéformage intermédiaire permet en effet de convertir tout ou partie de la charge hydrocarbonée gazeuse en gaz de synthèse (CO + $H_2$) avant sa combustion dans la deuxième zone de réduction, tout en utilisant la chaleur des réactions de la boucle CLC. La cinétique de réaction du gaz de synthèse avec le transporteur

d'oxygène étant plus élevée que celle de la charge hydrocarbonée gazeuse avec le transporteur d'oxygène, les performances du procédé CLC sont améliorées, tout en limitant le temps de séjour de la charge au contact de porteur d'oxygène afin de limiter la taille des réacteurs utilisés.

En outre, le gaz de synthèse ayant une bonne réactivité avec la plupart des matériaux transporteur d'oxygène, et en particulier avec des minerais peu coûteux, il est alors possible de minimiser les coûts liés à la masse active oxydo-réductrice tout en fournissant un procédé CLC performant en termes de conversion de la charge. En effet, malgré le fait que les minerais ne présentent généralement pas une activité catalytique suffisante pour induire un reformage in-situ de la charge hydrocarbonée, c'est-à-dire un reformage dans la zone de réduction, tel que ce serait le cas par exemple avec l'oxyde de nickel, la présente invention permet toutefois d'assurer efficacement le reformage de la charge.

Ainsi, la présente invention porte, selon un premier aspect, sur un procédé de combustion d'une charge hydrocarbonée gazeuse par oxydo-réduction en boucle chimique, dans lequel :

- on envoie la charge hydrocarbonée gazeuse dans une première zone de réduction opérant en lit fluidisé pour effectuer la combustion partielle de la charge hydrocarbonée gazeuse au contact d'un premier flux de particules d'une masse active oxydo- réductrice ;
- on sépare les particules de la masse active oxydo-réductrice et un flux gazeux contenus dans un mélange issu de la première zone de réduction pour envoyer le flux gazeux vers une zone de reformage ;
- on effectue le vaporeformage catalytique du flux gazeux dans la zone de reformage comprenant un lit fixe de catalyseur de reformage pour produire un effluent gazeux comportant du gaz de synthèse ;
- on envoie l'effluent gazeux dans une deuxième zone de réduction opérant en lit fluidisé pour effectuer la combustion de l'effluent gazeux au contact d'un deuxième flux de particules de masse active oxydo- réductrice ;
- on oxyde les particules de masse active oxydo-réductrice ayant séjourné dans les première et deuxième zones de réduction par mise en contact avec un flux de gaz oxydant dans une zone d'oxydation opérant en lit fluidisé.

Selon un mode de réalisation de l'invention, on sépare au moins une partie des particules de masse active oxydées d'un flux de gaz oxydant appauvri en oxygène à l'issue de l'oxydation dans la zone d'oxydation pour former le premier flux de particules alimentant le première zone de réduction, et le deuxième flux de particules alimentant la deuxième zone de réduction est formé par les particules de masse active issues de la première zone de réduction et séparées du flux gazeux.

Selon un autre mode de réalisation de l'invention, on sépare au moins une partie des particules de masse active oxydées d'un flux de gaz oxydant appauvri en oxygène à l'issue de l'oxydation dans la zone d'oxydation pour former le premier flux de particules alimentant le première zone de réduction et le deuxième flux de particules alimentant la deuxième zone de réduction.

Selon ce mode de réalisation, on peut envoyer ladite au moins une partie des particules de masse active oxydées séparées du flux de gaz oxydant appauvri en oxygène dans un réservoir, avant de diviser ladite au moins une partie des particules oxydées en ledit premier flux de particules et ledit deuxième flux de particules.

Avantageusement, on contrôle la combustion partielle dans la première zone de réduction de manière à ce que de la vapeur d'eau soit produite en quantité suffisante pour effectuer le vaporéformage catalytique dudit flux gazeux.

De préférence, le rapport vapeur d'eau sur carbone S/C est supérieur ou égal à 1,5 dans le flux gazeux issu de la première zone de réduction.

De préférence, le taux de conversion de la charge hydrocarbonée gazeuse est compris entre 40 % et 80 %, plus préférentiellement entre 40 % et 60 %, dans la première zone de réduction.

Selon un mode de réalisation de l'invention, on collecte des fines de la masse active oxydo-réductrice entrainées dans ledit flux gazeux avant l'entrée dudit flux gazeux dans la zone de reformage, en appliquant une diminution de la vitesse du gaz dans une zone de collecte située entre la première zone de réduction et la zone de reformage.

Selon un mode de réalisation de l'invention, on opère un échange de chaleur entre le lit fixe de catalyseur de reformage et le lit fluidisé de la deuxième zone de réduction au moyen de tubes verticaux formés par un matériau thermiquement conducteur, tel que des tubes métalliques, contigus au lit fixe et au lit fluidisé.

Selon la présente invention, la charge hydrocarbonée gazeuse comprend de préférence essentiellement du méthane, et le catalyseur de reformage du méthane comprenant de préférence du nickel.

Avantageusement, la masse active oxydo-réductrice est composée d'oxydes métalliques provenant de minerais.

Selon un deuxième aspect, la présente invention porte sur une installation pour réaliser la combustion d'une charge hydrocarbonée gazeuse selon le procédé décrit. L'installation comprend :

- une première zone de réduction munie à sa base de moyens d'injection de ladite charge hydrocarbonée gazeuse et d'une entrée pour un premier flux d'une masse active oxydo-réductrice sous forme de particules, et munie à son sommet d'une évacuation pour un mélange comprenant un flux gazeux et les particules de la masse active ;

- un dispositif de séparation recevant le mélange pour séparer le flux gazeux des particules de la masse active;
- une zone de vaporéformage comportant un lit fixe de catalyseur de reformage, une entrée pour le flux gazeux à la base du lit fixe, et une sortie pour un effluent gazeux comportant du gaz de synthèse;
- une deuxième zone de réduction munie à sa base d'une entrée pour ledit effluent gazeux et d'une alimentation en un deuxième flux de masse active oxydo-réductrice sous forme de particules, et munie à son sommet d'une sortie pour des fumées;
- une zone d'oxydation munie à sa base d'une alimentation en particules de masse active oxydo-réductrice ayant séjourné dans les première et deuxième zones de réduction et de moyens d'injection d'un gaz de fluidisation oxydant, et munie à son sommet d'une évacuation d'un gaz oxydant appauvri en oxygène et des particules de masse active oxydo-réductrice oxydées.

Selon un mode de réalisation, l'alimentation en ledit deuxième flux de particules de la deuxième zone de réduction est connectée audit dispositif de séparation.

Selon un autre mode de réalisation, l'installation comprend un deuxième dispositif de séparation recevant le gaz oxydant appauvri en oxygène et les particules de la masse active oxydo-réductrice oxydées provenant de la zone d'oxydation, l'entrée du premier flux de particules de la première zone de réduction et l'alimentation en ledit deuxième flux de particules de la deuxième zone de réduction sont chacune connectées audit deuxième dispositif de séparation, de préférence par l'intermédiaire d'un réservoir.

Selon un mode de réalisation, la première zone de réduction est formée par un premier réacteur, la zone de reformage et la deuxième zone de réduction sont intégrées dans un même deuxième réacteur, et ce deuxième réacteur comprend des tubes verticaux formés par un matériau thermiquement conducteur, tel que des tubes métalliques, contigus au lit fixe et à un lit fluidisé de la deuxième zone de réduction pour opérer un échange de chaleur entre ledit lit fixe et ledit lit fluidisé.

Selon un mode de réalisation, l'installation comprend en outre une zone de collecte située entre la première zone de réduction et la zone de reformage pour collecter les fines du porteur d'oxygène entrainées dans le flux gazeux. Cette zone de collecte fait de préférence partie d'un réacteur intégrant la deuxième zone de réduction, et elle comprend de préférence une partie tronconique dont le sommet est en contact avec la zone de reformage.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1 est un organigramme simplifié du procédé CLC selon l'invention, représentant les principales étapes impliquant la charge hydrocarbonées gazeuse.

La figure 2 est une représentation schématique d'une installation CLC selon un premier mode de réalisation de l'invention, comportant deux réacteurs de réduction successifs avec une zone de reformage intermédiaire et une circulation du transporteur d'oxygène en série vis-à-vis des deux réacteurs de réduction.

La figure 3 est une représentation schématique d'une installation CLC selon un deuxième mode de réalisation de l'invention, comportant deux réacteurs de réduction successifs avec une zone de reformage intermédiaire et une circulation du transporteur d'oxygène en parallèle vis-à-vis des deux réacteurs de réduction.

La figure 4 est un schéma illustrant une variante des premier et deuxième modes de réalisation de l'installation CLC selon l'invention, montrant un deuxième réacteur de réduction comprenant à sa base la zone de reformage et une zone de collecte de fines particules solides en amont de la zone de reformage.

La figure 5 est un schéma illustrant une autre variante des premier et deuxième modes de réalisation de l'installation CLC selon l'invention, montrant un second réacteur de réduction comprenant à sa base la zone de reformage et des moyens de conduction de la chaleur entre le lit fixe de la zone de reformage et le lit fluidisé de la zone de réduction.

Sur les figures, les mêmes références désignent des éléments identiques ou analogues.

**Description de l'invention**

Il convient de noter, dans la présente description, qu'on entend par « reformage intermédiaire » de la charge hydrocarbonée gazeuse, un reformage qui a lieu entre deux zones de réduction, par opposition à un reformage « in-situ », entendu ici comme un reformage de la charge au sein de la zone de réduction. On rappelle qu'une zone de réduction doit être comprise ici, en relation avec la définition du procédé CLC déjà donnée plus haut, comme une zone

réactionnelle dans laquelle la masse oxydo-réductrice est réduite. La réaction de reformage est détaillée plus bas, en relation avec la description de la figure 1.

Dans la présente description, les expressions « matériau transporteur d'oxygène », « porteur d'oxygène », « masse oxydo-réductrice » et « masse active oxydo-réductrice » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée « masse active » ou le terme « solide » pourront être également utilisés.

Dans le procédé CLC selon l'invention, les charges hydrocarbonées utilisées sont des charges hydrocarbonées gazeuses, de préférence composées essentiellement de méthane, par exemple du gaz naturel ou un biogaz.

La présente invention propose de mettre en oeuvre un catalyseur de vaporéformage en lit fixe à une étape intermédiaire de la combustion de la charge, c'est-à-dire après une première étape de réduction dans une première zone de réduction conventionnelle, afin de bénéficier, pour le reformage, de la production de vapeur générée par la conversion partielle de la charge lors de la première étape de réduction.

La figure 1 représente schématiquement l'enchaînement des principales étapes du procédé CLC selon l'invention, impliquant la charge hydrocarbonée gazeuse. Les autres étapes de la boucle CLC, telle que l'étape d'oxydation du porteur d'oxygène, ne sont pas représentées.

L'enchainement des étapes E1 à E4 illustré à la figure 1 se déroule comme décrit ci-après.

*E1 : première étape de réduction*

Une première étape de réduction E1 consiste à mettre en contact la totalité de la charge hydrocarbonée gazeuse 1, par exemple du gaz naturel, avec le porteur d'oxygène 2 issu du réacteur d'oxydation. Cette mise en contact s'effectue dans une zone de réduction opérant en lit fluidisé, tel qu'un réacteur sensiblement allongé et vertical communément appelé « riser » selon la terminologie anglo-saxonne.

La réaction globale est la réaction (1) décrite plus haut. Plus en détails, dans le cas de la conversion des charges hydrocarbonées gazeuses dans un procédé CLC, comme dans la présente invention, deux étapes peuvent être distinguées. Tout d'abord, la molécule d'hydrocarbure est transformée en un gaz de synthèse sur le porteur d'oxygène selon l'équation (3), puis le gaz de synthèse formé est oxydé sur le porteur d'oxygène en CO et $H_2$ selon les équations (4) et (5). Les réactions de conversion du gaz de synthèse selon les équations (4) et (5) présentent une cinétique très élevée en comparaison à la réaction de formation de ce gaz de synthèse selon l'équation (3).

$$C_nH_m + nM_xO_y \rightarrow nCO + \frac{m}{2}H_2 + nM_xO_{y-1} \quad (3)$$

$$CO + M_xO_y \rightarrow CO_2 + M_xO_{y-1} \quad (4)$$

$$H_2 + M_xO_y \rightarrow H_2O + M_xO_{y-1} \quad (5)$$

La chaleur nécessaire à la réaction est apportée par le porteur d'oxygène.

La température du lit fluidisé est typiquement comprise entre 700°C et 1100°C, par exemple de l'ordre de 950°C.

Seule une conversion partielle de la charge est réalisée lors de cette étape E1. La conversion de la charge est telle que la quantité de vapeur produite est suffisante pour permettre le reformage ultérieur de la charge dans la zone de reformage intermédiaire, en particulier la quantité de vapeur produite doit être suffisante pour fournir un rapport vapeur d'eau sur carbone S/C (Steam on Carbon ratio en anglais) propice aux réactions de vaporéformage catalytique qui ont lieu dans la zone de vaporéformage intermédiaire.

De préférence, le taux de conversion de la charge est compris entre 40% et 80%, de préférence entre 40% et 60%.

Le taux de conversion représente la fraction de réactif i qui réagit lors d'une réaction chimique. Il est défini comme suit :

$$X_i = (n_{i,0} - n_{i,t}) / n_{i,0}$$

avec *X* le taux de conversion du réactif *i, n* la quantité de matière (en moles), les indices *0* et *t* représentant respectivement l'état initial et un temps ultérieur donné.

De préférence, le rapport S/C est supérieur à 1,5. Un tel rapport permet de minimiser la formation de coke sur la catalyseur, tel que cela est expliqué plus loin en relation avec l'étape de vaporéformage E3.

Le temps de contact dans cette première zone de réduction varie typiquement entre 1 seconde et 1 minute, de préférence entre 1 s et 20 s.

Ainsi, on contrôle de préférence la combustion partielle dans cette première zone de réduction de manière à ce que de la vapeur d'eau soit produite en quantité suffisante pour effectuer le vaporeformage ultérieur de la charge dans la zone de reformage. Afin d'obtenir le taux de conversion de la charge et la quantité de vapeur d'eau souhaitée, on fait par exemple varier le flux de solide et la température du porteur d'oxygène en fonction du débit de la charge gazeuse.

La masse oxydo-réductrice peut être composée d'oxydes métalliques, tels que par exemple des oxydes de Fe, Ti, Ni, Cu, Mn, Co, V, seuls ou en mélange, pouvant provenir de minerais, tel que l'ilménite ($FeTiO_3$) ou un minerai naturel de manganèse, comme la pyrolusite ($MnO_2$), ou être synthétiques (par exemple des particules d'oxyde de fer supportées sur alumine $Fe_2O_3/Al_2O_3$), avec ou sans liant, et présente les propriétés d'oxydo-réduction requises et les caractéristiques nécessaires à la mise en oeuvre de la fluidisation.

Avantageusement, la masse oxydo-réductrice provient de minerais, généralement moins couteux que les particules synthétiques. Selon l'invention, le reformage effectué à l'étape E3 permet en effet d'utiliser ce type de masse active étant donné que le gaz de synthèse issu du reformage présente une bonne réactivité avec la plupart des matériaux transporteur d'oxygène. Le minerai peut être préalablement broyé et tamisé afin d'obtenir une masse active de granulométrie compatible avec une mise en oeuvre en lit fluidisé.

La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 3 % poids, ce qui permet de n'utiliser qu'une fraction de la capacité de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures imposées par les réactions.

La masse active est sous la forme de particules fluidisables, appartenant aux groupes A ou B de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 50 $\mu$m et 500 $\mu$m (diamètre moyen de Sauter), de préférence comprise entre 100 $\mu$m et 300 $\mu$m, pour une densité comprise entre 1 000 kg/$m^3$ et 6 000 kg/$m^3$ et préférentiellement entre 1 500 kg/$m^3$ et 5 000 kg/$m^3$.

La masse active oxydo-réductrice peut subir une phase d'activation de manière à augmenter ses capacités réactives, pouvant consister en une phase de montée en température, de préférence progressive, et de préférence sous atmosphère oxydante, par exemple sous air.

*E2 : étape de séparation gaz/solide*

A l'issue de la première étape de réduction E1, le mélange comprenant la charge gazeuse partiellement convertie et les particules du porteur d'oxygène fait l'objet d'une étape de séparation permettant de séparer le porteur d'oxygène de la fraction gazeuse au sein du mélange. Pour cela, le mélange 3 issu de la première zone de réduction est envoyés vers des moyens de séparation solide/gaz bien connus de l'homme du métier, tel qu'un cyclone placé en tête du premier réacteur de réduction.

La fraction gazeuse 4, composée essentiellement d'hydrocarbures gazeux, de vapeur d'eau, de $CO_2$ et de gaz de synthèse ($CO + H_2$), est envoyée vers une zone réactionnelle intermédiaire pour une étape de vaporéformage catalytique E3. La fraction solide 5 comportant les particules du porteur d'oxygène est envoyée vers le réacteur d'oxydation pour être à nouveau oxydée (étape non représentée), ou est alternativement envoyée vers une deuxième zone de réduction pour la réalisation d'une deuxième étape de réduction E4 visant à compléter la combustion de la charge hydrocarbonée gazeuse.

*E3 : étape de vaporéformage catalytique*

Cette étape consiste à réaliser le vaporéformage de la fraction gazeuse 4 au contact d'un catalyseur de vaporéformage mis en oeuvre en lit fixe. Cette étape assure la conversion poussée de la charge hydrocarbonée gazeuse, par exemple du méthane, en gaz de synthèse ($H_2 + CO$).

Cette réaction de reformage catalytique avec de la vapeur d'eau est résumée par l'équation (6) ci-dessous. La vapeur d'eau a été produite lors de l'étape préalable de réduction E1. La réaction catalytique selon l'équation (7) peut également se produire entre le $CO_2$ présent et la charge hydrocarbonée gazeuse pour également produire du gaz de synthèse (reformage dit « sec »). La réaction de reformage à la vapeur reste la réaction ayant le plus d'impact sur la conversion de la charge par rapport au reformage sec.

$$C_nH_m + nH_2O \xleftrightarrow{Catalyseur} nCO + (n + \frac{m}{2})H_2 \qquad (6)$$

$$C_nH_m + nCO_2 \xleftrightarrow{Catalyseur} 2nCO + \frac{m}{2}H_2 \qquad (7)$$

De préférence, le temps de séjour des réactifs dans cette zone de vaporéformage est tel que la charge hydrocarbonée gazeuse est presque totalement convertie. Typiquement, le temps de séjour est très court dans cette zone de vaporéformage, et est de préférence compris entre 50 ms et 1 s, plus préférentiellement compris entre 0,1 s et 1 s,. Ce temps de séjour peut varier selon la température à laquelle est réalisé le vaporéformage, sachant que la réaction de vaporéformage est généralement favorisée quand la température augmente.

L'effluent gazeux 6 produit lors de cette étape E3 se compose alors essentiellement de gaz de synthèse, de $CO_2$, de vapeur d'eau et d'hydrocarbures gazeux résiduels, par exemple moins de 5% d'hydrocarbures gazeux résiduels, voire moins de 1 %.

On utilisera tout type de catalyseur adapté au reformage de la charge hydrocarbonée gazeuse, généralement bien connu de l'homme du métier. Par exemple, et sans limitation aucune, on utilise un catalyseur à phase active à base de nickel dans le cas où on souhaite réaliser le reformage d'une charge comprenant majoritairement du méthane au contact de vapeur d'eau, selon la réaction bien connue de vaporéformage du méthane (VMR), ou « Steam Methane Reforming » (SMR) en anglais. La réaction de vaporéformage du méthane est résumée par l'équation (8) suivante :

$$CH_4 + H_2O \leftrightarrow CO + 3H_2 \qquad (8)$$

Cette réaction est généralement fortement endothermique et nécessite un apport d'énergie. Dans les procédés industriels classiques dédiés au reformage, on a généralement recours à deux modes d'apport d'énergie : soit l'introduction d'oxygène libre dans le milieu réactionnel pour effectuer une oxydation partielle de la charge dont l'exotherme compense l'endothermicité de la réaction de reformage, soit le recours à un chauffage externe.

Selon la présente invention, on utilise la chaleur produite par la boucle CLC pour fournir l'énergie nécessaire à la réaction de vaporéformage.

En particulier, la chaleur est transmise au lit fixe de catalyseur de la zone de vaporéformage par le flux gazeux chaud provenant de la première zone de réduction opérant en lit fluidisé, qui alimente ladite zone de vaporéformage, ainsi que par la chaleur du lit fluidisé de la deuxième zone de réduction en aval de la zone de vaporéformage catalytique, par exemple tel que cela est décrit plus loin en relation avec la figure 5. Le lit fluidisé circulant de la boucle CLC dont la température est comprise entre 700°C et 1100°C. Ces niveaux de température du lit fluidisé circulant sont en effet compatibles avec les températures d'opération classique des réactions de reformage catalytique. Typiquement, la température de la réaction de reformage catalytique dans la zone de vaporéformage intermédiaire est comprise entre 700°C et 900°C.

Le catalyseur est sous forme d'un lit fixe de particules, de préférence positionné à la base d'un deuxième réacteur qui contient également, en aval du lit fixe, une zone de réduction opérant en lit fluidisé pour une deuxième étape de réduction du porteur d'oxygène au contact de l'effluent gazeux 6 issu de la zone de vaporéformage (étape E4).

Les particules du lit fixe peuvent être des particules catalytiques monométalliques supportées sur différents oxydes métalliques, tel que, sans être limitatif, de l'alumine $Al_2O_3$, de l'oxyde de calcium CaO, de l'oxyde de magnésium MgO, des oxydes mixtes comme $Al_2O_3$-CaO. De préférence, les particules sont à base de nickel en tant que phase active, notamment dans le cas de la combustion d'une charge hydrocarbonée contenant essentiellement du méthane, et comprennent préférentiellement de 6% à 25% poids de nickel, par exemple sur un support comprenant majoritairement de l'alumine $Al_2O_3$. Un tel catalyseur comprenant du nickel supporté sur de l'alumine est typiquement utilisé pour la production d'hydrogène, et est généralement utilisé avec de la vapeur d'eau en excès afin de limiter la formation de coke sur le catalyseur. Dans un tel cadre de production industrielle d'hydrogène, le rapport molaire entre la vapeur d'eau et le carbone contenu dans la charge (ratio S/C pour steam/carbon, calculé sur des moles) est généralement compris entre 2,5 et 3,5, de préférence entre 2,5 et 3, afin de garantir la durée de vie du catalyseur.

Un excès de vapeur est également préférable pour le vaporéformage selon la présente invention. Les conditions opératoires dans la première zone de réduction sont telles qu'on peut obtenir la quantité de vapeur propice aux réactions de reformage. Avantageusement, un rapport S/C supérieur ou égal à 1,5 suffit à minimiser la formation de coke sur le catalyseur selon la présente invention, permettant de conserver ainsi durablement son activité et sa résistance mécanique, alors que des valeurs plus élevées, généralement comprises entre 2,5 et 3,5 sont rencontrées classiquement dans le vaporéformage pour la production d'hydrogène.

La présente invention n'exclue pas la possibilité d'inclure une injection vapeur d'eau additionnelle, c'est-à-dire

en plus de la vapeur d'eau provenant des réactions dans le premier réacteur de réduction, dans la zone de vaporéformage. Dans ce cas, cette injection de vapeur d'eau additionnelle peut se présenter sous la forme d'une alimentation dédiée, avec de la vapeur d'eau introduite dans le procédé, ou une recycle des fumées issues de la deuxième zone de réduction.

*E4 : deuxième étape de réduction*

L'effluent gazeux 6 issu de l'étape de vaporéformage E3 est envoyé dans la deuxième zone de réduction pour finaliser la combustion de la charge gazeuse. Dans cette deuxième zone de réduction opérant en lit fluidisé, l'effluent 6 est mis en contact avec un flux de particules de porteur d'oxygène 7 provenant de la zone d'oxydation, ou de la première zone de réduction après séparation lors de l'étape E2.

Cette deuxième étape de réduction vise à convertir le gaz de synthèse et les hydrocarbures résiduels de l'effluent 6 afin de produire des fumées de combustion 8 comportant quasi exclusivement du $CO_2$ et de l'$H_2O$.

Cet effluent 6 est enrichi en gaz de synthèse par rapport à la charge hydrocarbonée brute 1, ce qui permet d'améliorer la cinétique globale de la transformation de la charge en vapeur d'eau et $CO_2$ au contact de la masse active oxydo-réductrice, comparativement à un procédé CLC classique sans vaporéformage intermédiaire (voir équations 3, 4, 5 ci-dessus).

Cette deuxième zone de réduction se présente de préférence sous la forme d'un réacteur sensiblement allongé et vertical de type riser.

La chaleur nécessaire à la réaction est apportée par le porteur d'oxygène 7 et l'effluent gazeux 6. La température du lit fluidisé est typiquement comprise entre 700°C et 1100°C, par exemple de l'ordre de 950°C.

De préférence, le taux de conversion de la charge à l'issu de cette deuxième étape, incluant la conversion de la charge lors de la première étape de réduction, est supérieur ou égal à 98 %.

Le temps de contact dans cette deuxième zone de réduction varie typiquement entre 1 s et 1 minute, de préférence entre 1 s et 20 secondes.

La figure 2 est un schéma de principe simplifié de l'installation CLC selon un premier mode de réalisation de l'invention.

L'installation de combustion en boucle chimique 1000 comprend une zone d'oxydation 110, aussi appelé réacteur d'oxydation ou « réacteur air », dont la fonction est d'oxyder le porteur d'oxygène sous formes de particules, en provenance d'une zone de réduction 140, aussi appelée réacteur de réduction ou « réacteur fuel ». La fonction de la zone 140 est, en association avec une autre zone de réduction 120, de réaliser la réduction du porteur d'oxygène au contact d'une charge gazeuse (13, 14) pour libérer l'oxygène du porteur et effectuer la combustion de la charge. Le réacteur d'oxydation 110 et les deux zones de réduction 120 et 140 opèrent en lit fluidisé, et le porteur d'oxygène circule entre la zone d'oxydation 110 et les deux zones de réduction 120/140 pour former la boucle de la combustion en boucle chimique.

Le porteur d'oxygène provenant de la zone de réduction 140, et séparé des fumées de combustion 15 dans un cyclone 153, est envoyé dans le réacteur d'oxydation 110 dans un état tout ou partiellement réduit. Celui-ci est transporté en écoulement ascendant co-courant avec un flux de gaz oxydant 10, tel que de l'air, au sein du réacteur d'oxydation 110, et réagit au contact dudit gaz oxydant selon la réaction (2) décrite plus haut. Il en résulte un flux de gaz oxydant appauvri en oxygène, par exemple de l'air appauvri, et un flux de solide porteur d'oxygène à nouveau oxydé. Le flux de gaz oxydant appauvri en oxygène est séparé du flux de solide porteur d'oxygène en tête du réacteur d'oxydation 110 par un système de séparation gaz/solide. Pour cela, deux dispositifs de séparation gaz/solide 150 et 151 tels que des cyclones sont mis en oeuvre. Une partie du mélange gaz/solide évacué en tête du réacteur 110 est envoyée dans le cyclone 150, afin de séparer le gaz oxydant appauvri en oxygène 11 d'un flux de solide porteur d'oxygène qui retourne dans le réacteur 110 par l'intermédiaire d'un siphon 160, pour être davantage oxydé. Une autre partie du mélange gaz/solide évacué en tête du réacteur 110 est envoyée dans le cyclone 151 pour séparer le gaz oxydant appauvri en oxygène 12 d'un autre flux de solide porteur d'oxygène qui est envoyé, par l'intermédiaire du siphon 161, dans le premier réacteur de réduction 120.

La zone d'oxydation 110 est ainsi munie d'une première alimentation en porteur d'oxygène issu de la zone de réduction 120, d'une deuxième alimentation en porteur d'oxygène issu de la zone de d'oxydation 110, de moyens d'injection du gaz oxydant 10 permettant la fluidisation des particules du porteur d'oxygène, et d'une évacuation d'un mélange gaz/solide pour le gaz oxydant appauvri en oxygène le porteur d'oxygène oxydé. Les alimentations en porteur d'oxygène et les moyens d'injections du gaz oxydant se situent à la base de la zone d'oxydation 110. Les alimentations en porteur sont positionnées dans la partie inférieure du réacteur, au-dessus des moyens d'injection du gaz oxydant 10 situés au fond du réacteur. L'évacuation du mélange gaz/solide est positionnée en tête de la zone d'oxydation 110.

Dans le première réacteur de réduction 120 est opérée la première étape de réduction E1 telle que décrite plus haut : on réalise une conversion partielle de la charge hydrocarbonée gazeuse 13 par mise en contact avec la totalité du flux de solide porteur d'oxygène oxydé provenant du réacteur d'oxydation 110 et amené par le siphon 161. La réduction du porteur d'oxygène libère l'oxygène jouant le rôle de comburant, pour réaliser la réaction globale (1).

La zone de réduction 120 opère en lit fluidisé, avec un écoulement ascendant co-courant des particules du porteur d'oxygène et de la charge 13. La fluidisation est assurée par la charge gazeuse 13. Un gaz de fluidisation supplémentaire peut être utilisé, dont la nature et compatible avec le procédé, tel que de la vapeur d'eau ou du $CO_2$ ou un mélange des deux.

La première zone de réduction 120 comprend ainsi de moyens d'injection du combustible gazeux 13, de préférence une couronne d'injection ou tout autre moyen approprié (plaque perforée, plateau à calottes, buses d'injection, diffuseurs etc.), une entrée pour le porteur d'oxygène, et une évacuation pour le mélange comprenant le flux gazeux produit lors de la combustion et les particules du porteur d'oxygène partiellement réduites.

En tête du réacteur 120, le mélange gaz/solide formé par les particules du porteur d'oxygène et le flux gazeux comprenant la charge hydrocarbonée gazeuse partiellement convertie, et composé principalement de la charge hydrocarbonée initiale et d'$H_2O$, de $CO_2$, de CO et d'$H_2$, est envoyé dans un système de séparation gaz/solide 152 tel qu'un cyclone, pour réaliser l'étape de séparation E2 comme décrite plus haut. Le flux gazeux 14 issu du cyclone 152 est envoyé dans la zone de reformage 130 comprenant un lit fixe de catalyseur de reformage, et située à la base d'un deuxième réacteur de réduction 170 intégrant la deuxième zone de réduction 140. Les particules du porteur d'oxygène issues de la séparation dans le cyclone 152 sont également envoyées dans le réacteur de réduction 170, par l'intermédiaire d'un siphon 162, mais au-dessus de la zone de reformage 130, directement dans la deuxième zone de réduction 140. Le siphon 162 débouche ainsi au-dessus du lit fixe de catalyseur de la zone de reformage 130, c'est-à-dire en aval de cette zone si on considère le sens de circulation du courant gazeux. Ainsi les particules du porteur d'oxygène n'interviennent pas dans les réactions qui ont lieu au sein de la zone de reformage 130.

Bénéficiant de la production de vapeur générée par la conversion partielle de la charge 13 dans le premier réacteur de réduction 120, les composés du flux gazeux 14 réagissent au contact du catalyseur de reformage avec un ratio S/C désiré dans la zone 130, tel que cela est décrit plus haut en relation avec l'étape de reformage E3.

Le mélange gazeux issu de la zone 130 débouche dans la deuxième zone de réduction 140 où est finalisée la combustion de la charge gazeuse, tel que cela est décrit pour l'étape E4 plus haut. La deuxième zone de réduction 140 fonctionne, comme le premier réacteur de réduction 120, en lit fluidisé avec un écoulement ascendant co-courant des particules et de la charge 14. La fluidisation est assurée par la charge gazeuse 14. La conversion quasi totale de la charge, en $CO_2$ et $H_2O$, est atteinte en tête du deuxième réacteur de réduction. Le solide porteur d'oxygène est séparé des fumées de combustion 15 en tête du deuxième réacteur de réduction par un dispositif de séparation gaz/solide 153, e.g. un cyclone, pour être envoyé dans le réacteur d'oxydation 110 via un siphon 163 afin d'être à nouveau oxydé.

Le deuxième réacteur de réduction 170 comprend ainsi une zone de reformage 130 comprenant un lit fixe de catalyseur et surmontée d'une zone de réduction 140, une entrée pour la charge gazeuse 14 à la base du lit fixe, une entrée située au-dessus du lit fixe pour le porteur d'oxygène provenant du premier réacteur de réduction, et une évacuation pour les fumées de combustion 15 et les particules de porteur d'oxygène réduites.

Afin de limiter la perte de charge dans le lit fixe de catalyseur au sein de la zone de vaporéformage, la section de passage du flux de gaz entrant dans la zone de vaporéformage peut être de taille supérieure au reste du deuxième réacteur. Par exemple, le diamètre en fond du deuxième réacteur où se situe la zone de vaporéformage peut être plus grand que celui des autres parties en aval du réacteur, i.e. la deuxième zone de réduction. En multipliant par exemple par deux le diamètre de la zone de lit fixe de catalyseur, on divise ainsi par quatre la vitesse de gaz, et on diminue ainsi la perte de charge qui est directement liée à la vitesse de gaz.

Dans ce premier mode de réalisation, la circulation du porteur d'oxygène s'effectue en série relativement aux deux réacteurs de réduction 120 et 170, ce qui amène dans la présente description à utiliser l'expression mode « en série » pour le désigner.

De préférence, dans le cadre de la présente invention où une combustion totale est recherchée à l'issue des deux étapes de réduction, avec des fumées 15 quasi-exclusivement formées de $CO_2$ et d'$H_2O$, et où le $CO_2$ peut être destiné à être transporté et stocké, il est avantageux de travailler à pression faible, par exemple allant de la pression atmosphérique à moins de 3 bar, pour minimiser le coût énergétique de compression de l'effluent gazeux et maximiser ainsi le rendement énergétique de l'installation.

Le bilan des chaleurs des réactions ayant eu lieu dans les zones 110, 120, 130 et 140 est égal au pouvoir calorifique de la charge 13, de la même manière que si l'on en avait effectué la combustion dans un procédé de combustion classique. La chaleur produite par la boucle CLC est utilisée pour fournir l'énergie nécessaire à la réaction de vaporéformage tel que décrit plus haut en relation avec l'étape de vaporéformage E3.

Il est entendu que les lignes de transport dans lesquelles circulent le porteur d'oxygène, qui comprennent les dispositifs de séparation gaz/solide, e.g. les cyclones (150,151,152,153), et les siphons (160,161,162,163) tel que représenté à la figure 1, peuvent en outre comporter d'autres dispositifs du même type ou différents, parmi lesquels on peut citer, sans être exhaustif, des dispositifs de contrôle du flux de solide, tels que des vannes mécaniques ou pneumatiques, des dispositifs d'élutriation, des dispositifs d'échange de chaleur, ou d'autres éléments d'étanchéité que des siphons.

La figure 3 représente un schéma de principe simplifié de l'installation CLC selon un deuxième mode de

réalisation de l'invention.

Ce deuxième mode de réalisation diffère du premier mode de réalisation en ce que le flux de solide porteur d'oxygène issu de l'étape d'oxydation, non recyclé dans la zone d'oxydation, est divisé en deux sous flux, chacun alimentant une zone de réduction. Il est également fait référence à un mode « en parallèle » pour désigner ce deuxième mode de réalisation, dans lequel la circulation du porteur d'oxygène s'effectue en parallèle relativement aux deux réacteurs de réduction, par opposition un mode en série illustré à la figure 2.

La zone d'oxydation 210 et les deux zones de réductions 220 et 240, ainsi que la zone de vaporéformage 230 ont les mêmes fonctions et opèrent de la même manière que ce qui a été décrit pour l'installation 1000.

La zone d'oxydation 210 de l'installation CLC 2000 est identique à celle de l'installation 1000, à l'exception que celle-ci comporte une troisième alimentation en porteur d'oxygène réduit qui est issu de la première zone de réduction de 220.

Selon ce deuxième mode de réalisation, l'installation 2000 comporte, comme l'installation 1000, deux dispositifs de séparation gaz/solide 250 et 251 tels que des cyclones pour séparer le flux de gaz oxydant appauvri en oxygène du flux de solide porteur d'oxygène en tête du réacteur d'oxydation 210. Le cyclone 250 permet la séparation d'un flux de solide porteur d'oxygène qui retourne via le siphon de 260 dans la zone d'oxydation 210. Le siphon 251 permet la séparation d'un autre flux de solide porteur d'oxygène issu du réacteur 210, qui est envoyé par l'intermédiaire du siphon 261 dans un bac tampon 280 faisant office de réservoir, pour le stockage intermédiaire du porteur d'oxygène. Deux sous flux de solide porteur d'oxygène sont générés en sortie du bac tampon 280, l'un étant envoyé vers le premier réacteur de réduction de 220 via le siphon 264, l'autre étant envoyé vers le deuxième réacteur de réduction 270 via le siphon 262, qui débouche dans la zone de réduction 240 au-dessus du lit fixe de catalyseur de la zone de vaporéformage 230. Le bac tampon 280 permet une gestion simple de la variation de niveau de solide dans les jambes des siphons, permettant de gérer les variations de pression et la perte de charge dans le procédé.

Un cyclone 252 permet de séparer, dans le mélange obtenu au sommet du réacteur 220, les particules de porteur d'oxygène qui sont envoyées vers le réacteur d'oxydation 210 par le siphon 265, du flux gazeux 14 envoyé dans la zone de reformage 230.

En tête de la zone de réduction 240 du deuxième réacteur de réduction 270, un cyclone 253 permet de séparer les fumées 15 des particules de porteur d'oxygène qui sont envoyées vers le réacteur d'oxydation 210 par le siphon 263.

Le porteur d'oxygène qui est réduit dans la deuxième zone de réduction 240 est donc avantageusement un porteur « frais » issu du réacteur d'oxydation 210, qui n'a pas transité par la première zone de réduction comme c'est le cas dans l'installation 1000.

La chaleur disponible pour la réaction de vaporéformage dans la zone 230, qui peut provenir en partie du porteur d'oxygène dans le lit fluidisé de la zone de réduction 240, est supérieure à celle selon le premier mode de réalisation.

Il est également possible avec cette configuration de réguler le débit des deux sous-flux du porteur d'oxygène en fonction des conditions opératoires souhaitées dans chacune des deux zones de réduction 220 et 240, indépendamment ou non, en équipant les lignes amenant les sous-flux de solide dans les réacteurs avec des dispositifs adéquats, tels que des vannes mécaniques ou pneumatiques, par exemple des vannes en L. Une telle régulation peut permettre une plus grande flexibilité au niveau du bilan thermique, ou peut être utile pour augmenter la conversion de la charge dans la première zone de réduction, afin par exemple de limiter la formation de coke le cas échéant.

Le bac tampon 280 est facultatif. Une variante consiste par exemple à envoyer directement depuis la sortie du cyclone 251 chaque sous-flux dans son réacteur de réduction par l'intermédiaire d'un siphon dédié. D'autres dispositifs de type siphon double sortie, ou siphon avec vanne en L, peuvent être mis en oeuvre à la sortie du cyclone 251, pour alimenter en solide frais chacune des deux zones de réduction 220 et 240.

La figure 4 est une coupe schématique d'un réacteur de réduction 370 intégrant la zone de vaporéformage 330 et la zone de réduction 340, qui peut être mis en oeuvre selon le premier et deuxième modes de réalisation de l'invention. Seule la partie basse du réacteur est représentée. La jambe de retour du siphon qui alimente la zone de réduction 340 n'est également pas représentée.

Selon ce mode de réalisation, le réacteur de réduction 370 comprend à sa base, sous le lit fixe de catalyseur de la zone 330, une zone de collecte de fines particules solide 331. La charge gazeuse 14 issue du premier réacteur de réduction est d'abord envoyée dans cette zone de collecte 331, avant de traverser le lit fixe de catalyseur de la zone 330. Cette configuration a pour avantage de limiter le colmatage du lit fixe de catalyseur de reformage par d'éventuelles fines du porteur d'oxygène, ayant pu être formées par dégradation mécanique (attrition).

Cette zone 331 peut être une partie du réacteur 370 ayant une forme évasée plus large en bas qu'en haut, c'est-à-dire plus large du bas du réacteur vers la zone de vaporéformage, comme illustré schématiquement à la figure 4. Elle est par exemple formée d'une partie tronconique dont le sommet est en contact avec la zone de vaporéformage, et se poursuivant vers le bas par une partie aux parois verticales.

La zone 331, par exemple de par sa forme, permet d'obtenir une vitesse superficielle du gaz telle que les particules solides plus lourdes que le gaz, comprenant les fines du porteur d'oxygène, ne sont pas entrainées vers la

zone de vaporéformage.

On collecte ainsi les fines du porteur d'oxygène entrainées dans le flux gazeux 14 en appliquant une diminution de la vitesse du gaz dans cette zone de collecte située entre la première zone de réduction et la zone de reformage 330.

La figure 5 est une coupe schématique d'un réacteur de réduction 470 intégrant la zone de vaporéformage 430 et la zone de réduction 440, qui peut être mis en oeuvre selon le premier et deuxième modes de réalisation de l'invention. Seule la partie basse du réacteur est représentée. La jambe de retour du siphon qui alimente la zone de réduction 440 n'est également pas représentée.

Le lit fixe de catalyseur de reformage est en partie chauffé par le flux gazeux 14 provenant du premier réacteur de réduction, mais également par la source de chaleur supplémentaire formée par le lit fluidisé de la zone de réduction 440, et plus particulièrement par le solide porteur d'oxygène qui a une capacité thermique plus grande que celle d'un gaz.

Selon ce mode de réalisation, des moyens de conduction de la chaleur entre le lit fixe de la zone de reformage 430 et le lit fluidisé de la zone de réduction 440 sont disposés au contact des deux types de lit, permettant de favoriser le transfert de chaleur du lit fluidisé vers le lit fixe de catalyseur de reformage.

Par exemple, des tubes verticaux d'un matériau thermiquement conducteur, par exemple des tubes métalliques, sont plongés dans le lit fixe et en contact avec le lit fluidisé. Les tubes sont ainsi contigus des deux types de lit. Tout autre dispositif comprenant une surface thermiquement conductrice au contact à la fois du lit fixe et du lit fluidisé peut être mis en oeuvre, de telle sorte de favoriser la conduction de chaleur entre les deux types de lit.

De préférence, le matériau thermiquement conducteur ou la surface thermiquement conductrice, a une conductivité thermique supérieure à 10 W/(m.K), de préférence supérieure à 20 W/(m.K).

## Exemples

### *Exemple 1*

L'exemple 1 est un exemple de réalisation du procédé CLC tel que mis en oeuvre à la figure 2.

On considère une installation de combustion en boucle chimique opérant du gaz naturel contenant près de 100 % de méthane ($CH_4$). La composition du gaz, en fraction volumique, est la suivante :

| | |
|---|---|
| $CH_4$ | 95,05 % |
| $C_2H_6$ | 1,77 % |
| $C_3H_8$ | 0,57 % |
| $C_4H_{10}$ | 0,27 % |
| $C_5H_{12}$ | 0,11 % |
| $CO_2$ | 0,76 % |
| $N_2$ | 1,44 % |
| He | 0,03% |

Le porteur d'oxygène est un oxyde métallique à base de manganèse dont le couple oxydo-réducteur mis en jeu est $Mn_3O_4$/MnO.

Le dimensionnement du premier réacteur de réduction est fonction du niveau de conversion visé du méthane afin de produire suffisamment de vapeur pour l'étape de vaporéformage.

Afin de définir les conditions de conversion de la charge et de production de vapeur, une étude expérimentale est conduite dans un réacteur en quartz de 30 mm de diamètre chargé de 25 g de catalyseur de SMR. Le catalyseur est constitué de pastilles trouées de Ni/$Al_2O_3$ (BASF SG-9301 contenant 16,5 % poids d'oxyde de nickel), concassées et tamisées entre 1,6 mm et 3,15 mm (diamètre moyen de 2,4 mm). Le lit fixe de catalyseur dans ce réacteur simule la zone de vaporéformage.

Porté en température par un four électrique, le réacteur est alimenté à pression atmosphérique par un mélange gazeux composé de méthane, de vapeur d'eau et de $CO_2$ afin de reproduire les principaux composants du flux gazeux issu de la première étape de réduction E1. Une étude paramétrique sur la composition de ce mélange gazeux mais aussi sur la température de la réaction et le temps de séjour sur le catalyseur conduit aux éléments suivants :

- un ratio S/C d'au moins 1,5 permet d'éviter la formation de coke sur le catalyseur et de conserver ainsi durablement son activité et sa résistance mécanique. Ce résultat a été montré sur un test de longue durée de 300h à l'issu duquel l'oxydation du catalyseur à la vapeur n'a révélé aucune trace de composés carbonés (CO, $CO_2$) significatifs de la

combustion de coke. On note que cette valeur est faible en comparaison des conditions opératoires appliquées classiquement dans le vaporéformage industriel pour la production d'hydrogène (entre 2,5 et 3,5, plus souvent entre 2,5 et 3).

- avec un ratio S/C d'au moins 1,5, un temps de séjour de 0,1 s est suffisant pour convertir 99 % du méthane pour des températures supérieures à 800°C.

D'après l'équation (9) de la combustion du méthane ci-dessous, on en déduit qu'un niveau de conversion de 43 % du méthane doit être atteint dans le premier réacteur de réduction afin d'obtenir un ratio S/C de 1,5.

$$CH_4 + 2\ O_2 \rightarrow CO_2 + 2\ H_2O \qquad (9)$$

*Exemple 2*

L'exemple 2 est un exemple numérique simplifié illustrant la capacité calorifique du solide porteur d'oxygène disponible dans le cas d'une installation selon une configuration en série, tel qu'illustré à la figure 2, et d'une installation selon une configuration en parallèle, tel qu'illustré à la figure 3.

On considère une installation CLC de 200 MWth traitant une charge hydrocarbonée gazeuse constituée de 100% de méthane ($CH_4$).

On considère un débit de méthane $\dot{m_{CH4}}$ de 4 kg/s (soit 250 mol/s), et un débit solide d'oxyde métallique total de 805 kg/s.

Dans l'hypothèse d'un taux de conversion du méthane X égal à 40 % dans le premier réacteur de réduction, le flux gazeux en sortie du premier réacteur de réduction, et entrant dans la zone de vaporéformage à la base du 2ème réacteur de réduction, est alors composée de $CH_4$ non converti (150 mol/s), de $CO_2$ (100 mol/s) et de vapeur d'$H_20$ (200 mol/s).

On suppose que la température du solide porteur d'oxygène sortant du réacteur d'oxydation (110,210) est de 1000°C. On suppose que :

- dans la configuration en série, la température du solide porteur d'oxygène sortant du premier réacteur de réduction 120 et entrant dans la zone de réduction 140 du deuxième réacteur de réduction 170 est de 800°C.
- dans la configuration en parallèle, la température du solide porteur d'oxygène entrant dans la zone de réduction 240 du deuxième réacteur de réduction 270 est égale à la température du solide porteur d'oxygène en sortie du réacteur d'oxydation 210, soit 1000°C.

On considère que toute la chaleur de la réaction endothermique de SMR est puisée dans l'oxyde métallique entrant dans le deuxième réacteur de réduction. Cette hypothèse est établie uniquement à des fins de comparaison des modes en série et en parallèle, et ne doit pas être comprise comme étant en contradiction avec le reste de la description, qui indique en particulier qu'une partie de la chaleur nécessaire à la réaction de vaporéformage peut être également apportée par le flux gazeux alimentant la zone de reformage.

Avec cette hypothèse, on peut écrire :

$$\dot{m_{CH4}} \times \Delta H_{SMR} = \dot{m}_{solide} \times Cp_{solide} \times \Delta T_{solide}$$

Avec :

- l'enthalpie de la réaction SMR $\Delta H_{SMR}$ = + 206 kJ/mol ;
- $Cp_{solide}$, la chaleur spécifique de l'oxyde métallique, de 26 $J.mol^{-1}.K^{-1}$ avec une masse molaire de 55 g/mol ;
- $\Delta T_{solide}$ la différence entre la température du solide porteur d'oxygène après échange thermique avec le lit fixe de catalyseur de SMR et la température du solide porteur d'oxygène entrant dans le deuxième réacteur de réduction (dans la zone de réduction).

Dans le cas de la configuration en série, le débit $\dot{m_{solide}}$ entrant dans le deuxième réacteur de réduction 170 est égal au débit solide total de 805 kg/s, à une température de 800°C. Dans ce cas, on a $\Delta T_{solide}$ = 81 °C, soit une température du porteur d'oxygène après échange thermique avec le lit fixe de catalyseur de SMR de 800 - 81 = 719°C.

Dans le cas de la configuration en parallèle, le débit $\dot{m_{solide}}$ est égal au produit de (1-X), X étant le taux de

conversion de méthane, égal à 40%, par le débit solide total, soit (1 - 0,4) x 805 = 483 kg/s, à une température de 1000°C. Dans ce cas, on a $\Delta T_{solide}$ = 135°C, soit une température du porteur d'oxygène après échange thermique avec le lit fixe de catalyseur de SMR de 1000 - 135 = 865°C.

La réaction de SMR est donc favorisée dans le cas de la configuration parallèle où la température au niveau du lit catalytique SMR est plus élevée.

Afin de favoriser le transfert de chaleur entre le lit de solide porteur d'oxygène circulant et le lit fixe de catalyseur de SMR en fond du deuxième réacteur de réduction, des tubes conducteurs de chaleur peuvent être placés de manière contigüe entre ces deux solides (oxyde métallique et catalyseur SMR).

*Exemple 3*

L'exemple 3 est un exemple numérique simplifié illustrant la gestion de la perte de charge dans une installation selon l'invention.

On reprend la configuration donnée à l'exemple 1, à l'exception du temps de séjour du méthane dans le lit fixe : on considère dans cet exemple un temps de séjour de 0,2 s du méthane dans le lit fixe de catalyseur de SMR.

Afin de minimiser la perte de charge dans le lit fixe de catalyseur de SMR, le diamètre en fond du deuxième réacteur de réduction où se trouve le lit fixe est multiplié par 2. La vitesse gaz est ainsi divisée par 4.

Considérant une vitesse de gaz dans le deuxième réacteur de réduction de 7 m/s pour assurer le transport du solide porteur d'oxygène, on estime une vitesse gaz en sortie de lit fixe de catalyseur de SMR de 1,75 m/s (vitesse de gaz dans le deuxième réacteur divisée par 4). En entrée du lit fixe, en considérant une expansion molaire de 170% de la réaction de SMR, la vitesse gaz est de 1,75 / 1,7 = 1,0 m/s. La vitesse gaz moyenne au niveau du lit fixe est donc de (1 + 1,75) / 2 = 1,35 m/s. Pour assurer un temps de séjour de 0,2 s, la hauteur de lit fixe de catalyseur SMR est donc de 0,3 m.

D'après des mesures de pertes de charges réalisées sur trois types de catalyseur commerciaux de SMR (KATALCO$_{JM}$™ 57-4Q et 57-4MQ de Johnson Matthey, et SG-9301 de BASF), on estime la perte de charge, d'après l'équation d'Ergun, à environ 30 mbar/m pour une vitesse gaz de 1,35 m/s. Pour une hauteur de lit fixe de catalyseur SMR de 0,3 m, la perte de charge est donc d'environ 10 mbar.

Une telle perte de charge peut être compensée par une variation de la hauteur de solide porteur d'oxygène dans les jambes des siphons alimentant les réacteurs.

A titre indicatif, une variation de pression de 100 mbar entre le premier réacteur de réduction 120 et le deuxième réacteur de réduction 170 génère une variation de la hauteur solide dans le siphon intermédiaire 162 de 0,5 m, en utilisant par exemple comme porteur d'oxygène un minerai naturel de manganèse de type pyrolusite ayant une densité 3300 kg/m$^3$.

## Revendications

**1.** Procédé de combustion d'une charge hydrocarbonée gazeuse par oxydo-réduction en boucle chimique, dans lequel :

- on envoie la charge hydrocarbonée gazeuse (13) dans une première zone de réduction (120,220) opérant en lit fluidisé pour effectuer la combustion partielle de ladite charge hydrocarbonée gazeuse au contact d'un premier flux de particules d'une masse active oxydo- réductrice ;
- on sépare les particules de la masse active oxydo-réductrice et un flux gazeux (14) contenus dans un mélange issu de la première zone de réduction pour envoyer ledit flux gazeux (14) vers une zone de reformage (130,230,330,430);
- on effectue le vaporéformage catalytique dudit flux gazeux (14) dans la zone de reformage (130,230,330,430) comprenant un lit fixe de catalyseur de reformage pour produire un effluent gazeux comportant du gaz de synthèse ;
- on envoie ledit effluent gazeux dans une deuxième zone de réduction (140, 240,340,440) opérant en lit fluidisé pour effectuer la combustion dudit effluent gazeux au contact d'un deuxième flux de particules de masse active oxydo- réductrice ;
- on oxyde les particules de masse active oxydo-réductrice ayant séjourné dans les première (120,220) et deuxième (140,240,340,440) zones de réduction par mise en contact avec un flux de gaz oxydant (10) dans une zone d'oxydation (110,210) opérant en lit fluidisé.

**2.** Procédé selon la revendication 1, dans lequel on sépare au moins une partie des particules de masse active oxydées d'un flux de gaz oxydant appauvri en oxygène (12) à l'issue de l'oxydation dans la zone d'oxydation (110) pour former le premier flux de particules alimentant le première zone de réduction (120), et dans lequel le deuxième flux

de particules alimentant la deuxième zone de réduction (140) est formé par les particules de masse active issues de la première zone de réduction (120) et séparées du flux gazeux (14).

3. Procédé selon la revendication 1, dans lequel on sépare au moins une partie des particules de masse active oxydées d'un flux de gaz oxydant appauvri en oxygène (12) à l'issue de l'oxydation dans la zone d'oxydation (210) pour former le premier flux de particules alimentant le première zone de réduction (220) et le deuxième flux de particules alimentant la deuxième zone de réduction (240,340,440).

4. Procédé selon la revendication 3, dans lequel on envoie ladite au moins une partie des particules de masse active oxydées séparées du flux de gaz oxydant appauvri en oxygène (12) dans un réservoir (280), avant de diviser ladite au moins une partie des particules oxydées en ledit premier flux de particules et ledit deuxième flux de particules.

5. Procédé selon l'une des revendications précédentes, dans lequel on contrôle la combustion partielle dans la première zone de réduction (120,220) de manière à ce que de la vapeur d'eau soit produite en quantité suffisante pour effectuer le vaporéformage catalytique dudit flux gazeux (14).

6. Procédé selon l'une des revendications précédentes, dans lequel le rapport vapeur d'eau sur carbone S/C est supérieur ou égal à 1,5 dans le flux gazeux (14) issu de la première zone de réduction (120,220).

7. Procédé selon l'une des revendications précédentes, dans lequel le taux de conversion de la charge hydrocarbonée gazeuse est compris entre 40 % et 80 %, de préférence entre 40 % et 60 %, dans la première zone de réduction (120,220).

8. Procédé selon l'une des revendications précédentes, dans lequel on collecte des fines de la masse active oxydo-réductrice entrainées dans ledit flux gazeux (14) avant l'entrée dudit flux gazeux (14) dans la zone de reformage (330), en appliquant une diminution de la vitesse du gaz dans une zone de collecte (331) située entre la première zone de réduction et la zone de reformage (330).

9. Procédé selon l'une des revendications précédentes, dans lequel on opère un échange de chaleur entre le lit fixe de catalyseur de reformage et le lit fluidisé de la deuxième zone de réduction (140,240,340,440) au moyen de tubes verticaux (442) formés par un matériau thermiquement conducteur, tel que des tubes métalliques, contigus au lit fixe et au lit fluidisé.

10. Procédé selon l'une des revendications précédentes, dans lequel la charge hydrocarbonée gazeuse (13) comprend essentiellement du méthane, et dans lequel le catalyseur de reformage du méthane comprenant du nickel.

11. Procédé selon l'une des revendications précédentes, dans lequel la masse active oxydo-réductrice est composée d'oxydes métalliques provenant de minerais.

12. Installation pour réaliser la combustion d'une charge hydrocarbonée gazeuse (13) selon l'une des revendications 1 à 11, comprenant :

- une première zone de réduction (120,220) munie à sa base de moyens d'injection de ladite charge hydrocarbonée gazeuse (13) et d'une entrée pour un premier flux d'une masse active oxydo-réductrice sous forme de particules, et munie à son sommet d'une évacuation pour un mélange comprenant un flux gazeux et les particules de la masse active ;
- un dispositif de séparation (152,252) recevant ledit mélange pour séparer ledit flux gazeux (14) desdites particules de la masse active ;
- une zone de vaporéformage (130,230,330,430) comportant un lit fixe de catalyseur de reformage, une entrée pour ledit flux gazeux (14) à la base du lit fixe, et une sortie pour un effluent gazeux comportant du gaz de synthèse ;
- une deuxième zone de réduction (140,240,340,440) munie à sa base d'une entrée pour ledit effluent gazeux et d'une alimentation en un deuxième flux de masse active oxydo-réductrice sous forme de particules, et munie à son sommet d'une sortie pour des fumées (15) ;
- une zone d'oxydation (110) munie à sa base d'une alimentation en particules de masse active oxydo-réductrice ayant séjourné dans les première (120,220) et deuxième (140,240,340,440) zones de réduction et de moyens d'injection d'un gaz de fluidisation oxydant (10), et munie à son sommet d'une évacuation d'un gaz oxydant appauvri en oxygène et des particules de masse active oxydo-réductrice oxydées.

**13.** Installation selon la revendication 12, dans laquelle l'alimentation en ledit deuxième flux de particules de la deuxième zone de réduction (140) est connectée audit dispositif de séparation (152).

**14.** Installation selon la revendication 12, comportant un deuxième dispositif de séparation (251) recevant le gaz oxydant appauvri en oxygène et les particules de la masse active oxydo-réductrice oxydées provenant de la zone d'oxydation (210), et dans laquelle l'entrée dudit premier flux de particules de la première zone de réduction (220) et l'alimentation en ledit deuxième flux de particules de la deuxième zone de réduction (240) sont chacune connectées audit deuxième dispositif de séparation (251), de préférence par l'intermédiaire d'un réservoir (280).

**15.** Installation selon l'une des revendications 12 à 14, dans laquelle la première zone de réduction (120,220) est formée par un premier réacteur, la zone de reformage (130,330,530) et la deuxième zone de réduction (140,240,340,440) sont intégrées dans un même deuxième réacteur (170,270,370,470), et dans laquelle ledit deuxième réacteur (170,270,370,470) comprend des tubes verticaux (442) formés par un matériau thermiquement conducteur, tel que des tubes métalliques, contigus au lit fixe et à un lit fluidisé de la deuxième zone de réduction (140,240,340,440) pour opérer un échange de chaleur entre ledit lit fixe et ledit lit fluidisé.

**16.** Installation selon l'une des revendications 12 à 15, comprenant en outre une zone de collecte (331) située entre la première zone de réduction et la zone de reformage (330) pour collecter les fines du porteur d'oxygène entrainées dans le flux gazeux (14), ladite zone de collecte (331) faisant de préférence partie d'un réacteur intégrant la deuxième zone de réduction (340), et ladite zone de collecte comprenant de préférence une partie tronconique dont le sommet est en contact avec la zone de reformage (330).

**Patentansprüche**

**1.** Verfahren zum Verbrennen eines gasförmigen Kohlenwasserstoff-Einsatzmaterials durch clc-Oxidationsreduktion, wobei:

- das gasförmige Kohlenwasserstoff-Einsatzmaterial (13) in eine erste Reduktionszone (120, 220) geschickt wird, die im Fluidbett arbeitet, um die teilweise Verbrennung des gasförmigen Kohlenwasserstoff-Einsatzmaterials in Kontakt mit einem erstes Strom von Partikeln einer aktiven Redox-Masse durchzuführen;
- die Partikel der aktiven Redox-Masse und eines Gasstroms (14), die in einem Gemisch enthalten sind, das aus der ersten Reduktionszone stammt, getrennt werden, um den Gasstrom (14) in eine Reformierzone (130, 230, 330, 430) zu schicken;
- die katalytische Dampfreformierung des Gasstroms (14) in der Reformierzone (130, 230, 330, 430), umfassend ein Reformierkatalysator-Festbett, durchgeführt wird, um einen gasförmigen Abstrom zu erzeugen, der Synthesegas enthält;
- der gasförmige Abstrom in eine zweite Reduktionszone (140, 240, 340, 440) geschickt wird, die im Fluidbett arbeitet, um die Verbrennung des gasförmigen Abstroms in Kontakt mit einem zweiten Strom von Partikeln der aktiven Redox-Masse durchzuführen;
- die Partikel der aktiven Redox-Masse, die in der ersten (120, 220) und zweiten (140, 240, 340, 440) Reduktionzone verblieben sind, durch Inkontaktbringen mit einem Strom aus oxidierendem Gas (10) in einer Oxidationszone (110, 210), die im Fließbett arbeitet, oxidiert werden.

**2.** Verfahren nach Anspruch 1, wobei mindestens ein Teil der Partikel der aktiven oxidierten Masse von einem Strom aus an Sauerstoff (12) verarmten oxidierendem Gas am Ende der Oxidation in der Oxidationszone (110) getrennt werden, um den ersten Partikelstrom zu bilden, der die erste Reduktionszone (120) speist, und wobei der zweite Partikelstrom, der die zweite Reduktionszone (140) speist, durch die Partikel der aktiven Masse gebildet wird, die aus der ersten Reduktionszone (120) stammen und von dem Gasstrom (14) getrennt sind.

**3.** Verfahren nach Anspruch 1, wobei mindestens ein Teil der Partikel der aktiven oxidierten Masse von einem Strom aus an Sauerstoff (12) verarmten oxidierendem Gas am Ende der Oxidation in der Oxidationszone (210) getrennt werden, um den ersten Partikelstrom, der die erste Reduktionszone (220) speist, und den zweiten Partikelstrom, der die zweite Reduktionszone (240, 340, 440) speist, zu bilden.

**4.** Verfahren nach Anspruch 3, wobei der mindestens eine Teil der oxidierten Partikel der aktiven Masse, getrennt von dem Strom aus an Sauerstoff (12) verarmten oxidierendem Gas in einen Tank (280) geschickt wird, bevor der mindestens eine Teil der oxidierten Partikel in den ersten Partikelstrom und den zweiten Partikelstrom geteilt wird.

**5.** Verfahren nach einem der vorhergehenden Ansprüche, wobei die Teilverbrennung in der ersten Reduktionszone (120, 220) so gesteuert wird, dass der Wasserdampf in einer Menge erzeugt wird, die ausreicht, um die katalytische Dampfreformierung des Gasstroms (14) durchzuführen.

**6.** Verfahren nach einem der vorhergehenden Ansprüche, wobei das Verhältnis von Wasserdampf zu Kohlenstoff S/C in dem Gasstrom (14), der aus der ersten Reduktionszone (120, 220) stammt, größer oder gleich 1,5 ist.

**7.** Verfahren nach einem der vorhergehenden Ansprüche, wobei die Umwandlungsrate des gasförmigen Kohlenwasserstoff-Einsatzmaterials in der ersten Reduktionszone (120, 220) im Bereich zwischen 40 % und 80 %, vorzugsweise zwischen 40 % und 60 % liegt.

**8.** Verfahren nach einem der vorhergehenden Ansprüche, wobei Feinanteile der aktiven Redox-Masse, die in dem Gasstrom (14) vor dem Eintritt des Gasstroms (14) in die Reformierzone (330) mitgeführt werden, gesammelt werden, indem eine Verringerung der Geschwindigkeit des Gases in einer Sammelzone (331) angewendet wird, die zwischen der ersten Reduktionszone und der Reformierzone (330) liegt.

**9.** Verfahren nach einem der vorhergehenden Ansprüche, wobei ein Wärmeaustausch zwischen dem Reformierkatalysator-Festbett und dem Fließbett der zweiten Reduktionszone (140, 240, 340, 440) mithilfe von vertikalen Rohren (442) ausgeführt wird, die aus einem wärmeleitenden Material gebildet sind, wie beispielsweise Metallrohren, die an das Festbett und das Fluidbett angrenzen.

**10.** Verfahren nach einem der vorhergehenden Ansprüche, wobei das gasförmige Kohlenwasserstoff-Einsatzmaterial (13) im Wesentlichen Methan umfasst, und wobei der Methan-Reformierkatalysator Nickel umfasst.

**11.** Verfahren nach einem der vorhergehenden Ansprüche, wobei die aktive Redox-Masse aus Metalloxiden besteht, die aus Erzen stammen.

**12.** Anlage zum Durchführen der Verbrennung eines gasförmigen Kohlenwasserstoff-Einsatzmaterials (13) nach einem der Ansprüche 1 bis 11, umfassend:

- eine erste Reduktionszone (120, 220), die an ihrer Basis mit Einrichtungen zum Einspritzen des gasförmigen Kohlenwasserstoff-Einsatzmaterials (13) und einem Einlass für einen ersten Strom einer aktiven Redox-Masse in Form von Partikeln versehen ist, und die an ihrer Oberseite mit einer Ableitungsstelle für ein Gemisch, umfassend einen Gasstrom und die Partikel der aktiven Masse, versehen ist;
- eine Trennvorrichtung (152, 252), die das Gemisch aufnimmt, um den Gasstrom (14) von den Partikeln der aktiven Masse zu trennen;
- eine Dampfreformierzone (130, 230, 330, 430), die ein Reformierkatalysator-Festbett, einen Einlass für den Gasstrom (14) an der Basis des Festbetts und einen Auslass für einen gasförmigen Abstrom umfasst, der Synthesegas umfasst;
- eine zweite Reduktionszone (140, 240, 340, 440), die an ihrer Basis mit einem Einlass für den gasförmigen Abstrom und mit einer Einspeisestelle für einen zweiten Strom aus aktiver Redox-Masse in Form von Partikeln versehen ist, und an ihrer Oberseite mit einem Auslass für Rauchgase (15) versehen ist;
- eine Oxidationszone (110), die an ihrer Basis mit einer Einspeisestelle für Partikel der aktiven Redox-Masse, die in der ersten (120, 220) und zweiten (140, 240, 340, 440) Reduktionszone verblieben sind, und mit Einrichtungen zum Einspritzen eines oxidierenden Fluidisierungsgases (10) versehen ist, und an ihrer Oberseite mit einer Ableitungsstelle für an Sauerstoff abgereichertes oxidierendes Gas und oxidierte Partikel der aktiven Redox-Masse versehen ist.

**13.** Anlage nach Anspruch 12, wobei die Einspeisestelle für den zweiten Partikelstrom der zweiten Reduktionszone (140) mit der Trennvorrichtung (152) verbunden ist.

**14.** Anlage nach Anspruch 12, umfassend eine zweite Trennvorrichtung (251), die das an Sauerstoff abgereicherte oxidierende Gas und die oxidierten Partikel der aktiven Redox-Masse aufnimmt, die aus der Oxidationszone (210) stammen, und wobei der Einlass des ersten Partikelstroms der ersten Reduktionszone (220) und die Einspeisestelle für den zweiten Partikelstrom der zweiten Reduktionszone (240) jeweils mit der zweiten Trennvorrichtung (251), vorzugsweise mittels eines Tanks (280), verbunden sind.

**15.** Anlage nach einem der Ansprüche 12 bis 14, wobei die erste Reduktionszone (120, 220) durch einen ersten Reaktor

gebildet ist, die Reformierzone (130, 330, 530) und die zweite Reduktionszone (140, 240, 340, 440) in den gleichen Reaktor (170, 270, 370, 470) integriert sind und wobei der zweite Reaktor (170, 270, 370, 470) vertikale Rohre (442) umfasst, die aus einem wärmeleitenden Material, wie beispielsweise Metallrohren, gebildet sind, die an das Festbett und an ein Fließbett der zweiten Reduktionszone (140, 240, 340, 440) angrenzen, um einen Wärmeaustausch zwischen dem Festbett und dem Fluidbett durchzuführen.

**16.** Anlage nach einem der Ansprüche 12 bis 15, umfassend ferner eine Sammelzone (331), die zwischen der ersten Reduktionszone und der Reformierzone (330) liegt, um die Feinanteile des Sauerstoffträgers zu sammeln, die in dem Gasstrom (14) mitgeführt werden, wobei die Sammelzone (331) vorzugsweise Teil eines Reaktors ist, in den die zweite Reduktionszone (340) integriert ist, und wobei die Sammelzone vorzugsweise einen kegelstumpfförmigen Teil umfasst, dessen Oberseite mit der Reformierzone (330) in Kontakt ist.

## Claims

**1.** A method for chemical looping oxidation-reduction combustion of a gaseous hydrocarbon feed, comprising:

- sending gaseous hydrocarbon feed (13) to a first fluidized-bed reduction zone (120, 220) to perform partial combustion of said gaseous hydrocarbon feed on contact with a first stream of particles of a redox active mass,
- separating the redox active mass particles and a gas stream (14) contained in a mixture coming from the first reduction zone in order to send said gas stream (14) to a reforming zone (130, 230, 330, 430),
- carrying out catalytic steam reforming of said gas stream (14) in reforming zone (130, 230, 330, 430) comprising a reforming catalyst fixed bed in order to produce a gaseous effluent comprising syngas,
- sending said gaseous effluent to a second fluidized-bed reduction zone (140, 240, 340, 440) to perform combustion of said gaseous effluent on contact with a second stream of particles of a redox active mass,
- oxidizing the redox active mass particles that have stayed in the first (120, 220) and second (140, 240, 340, 440) reduction zones by contacting with an oxidizing gas stream (10) in a fluidized-bed oxidation zone (110, 210).

**2.** A method as claimed in claim 1, wherein at least part of the oxidized active mass particles is separated from an oxygen-depleted oxidizing gas stream (12) after oxidation in oxidation zone (110) in order to form the first particle stream fed to first reduction zone (120), and the second particle stream fed to second reduction zone (140) is made up of the active mass particles coming from first reduction zone (120) and separated from gas stream (14).

**3.** A method as claimed in claim 1, wherein at least part of the oxidized active mass particles is separated from an oxygen-depleted oxidizing gas stream (12) after oxidation in oxidation zone (120) in order to form the first particle stream fed to first reduction zone (220) and the second particle stream fed to second reduction zone (240, 340, 440).

**4.** A method as claimed in claim 3, wherein said at least part of the oxidized active mass particles separated from oxygen-depleted oxidizing gas stream (12) is sent to a tank (280) prior to separating said at least part of the oxidized particles into said first particle stream and said second particle stream.

**5.** A method as claimed in any one of the previous claims, wherein partial combustion in first reduction zone (120, 220) is controlled in such a way that steam is produced in sufficient amount for catalytic steam reforming of said gas stream (14).

**6.** A method as claimed in any one of the previous claims, wherein the steam to carbon ratio S/C is greater than or equal to 1.5 in gas stream (14) from first reduction zone (120, 220).

**7.** A method as claimed in any one of the previous claims, wherein the gaseous hydrocarbon feed conversion ratio ranges between 40 % and 80 %, more preferably between 40 % and 60 %, in first reduction zone (120, 220).

**8.** A method as claimed in any one of the previous claims, wherein redox active mass fines carried along with said gas stream (14) are collected before said gas stream (14) flows into reforming zone (330) by decreasing the gas velocity in a collection zone (331) arranged between the first reduction zone and reforming zone (330).

**9.** A method as claimed in any one of the previous claims, wherein a heat exchange is performed between the reforming catalyst fixed bed and the fluidized bed of second reduction zone (140, 240, 340, 440) by means of vertical tubes (442) made of a thermally conductive material, such as metal tubes contiguous to the fixed bed and to the fluidized bed.

**10.** A method as claimed in any one of the previous claims, wherein gaseous hydrocarbon feed (13) essentially comprises methane and the methane reforming catalyst comprises nickel.

**11.** A method as claimed in any one of the previous claims, wherein the redox active mass is made up of metal oxides extracted from ores.

**12.** A plant for combustion of a gaseous hydrocarbon feed (13) as claimed in any one of claims 1 to 11, comprising:

- a first reduction zone (120, 220) provided, at the base thereof, with means of injecting said gaseous hydrocarbon feed (13) and with an inlet for a first stream of a redox active mass in form of particles, and provided at the top thereof with an outlet for a mixture comprising a gas stream and the active mass particles,
- a separation device (152, 252) receiving said mixture for separating said gas stream (14) from said active mass particles,
- a steam reforming zone (130, 230, 330, 430) comprising a reforming catalyst fixed bed, an inlet for said gas stream (14) at the base of the fixed bed and an outlet for a gaseous effluent comprising syngas,
- a second reduction zone (140, 240, 340, 440) provided, at the base thereof, with an inlet for said gaseous effluent and a feed point for a second redox active mass stream in form of particles, and provided at the top thereof with an outlet for fumes (15),
- an oxidation zone (110) provided, at the base thereof, with a feed point for redox active mass particles that have stayed in the first (120, 220) and second (140, 240, 340, 440) reduction zones and with means of injecting an oxidizing fluidization gas (10), and provided at the top thereof with an outlet for an oxygen-depleted oxidizing gas and oxidized redox active mass particles.

**13.** A plant as claimed in claim 12, wherein the feed point for said second particle stream in second reduction zone (140) is connected to said separation device (152).

**14.** A plant as claimed in claim 12, comprising a second separation device (251) receiving the oxygen-depleted oxidizing gas and the oxidized redox active mass particles from oxidation zone (210), wherein the inlet for said first particle stream in first reduction zone (220) and the feed point for said second particle stream in second reduction zone (240) are each connected to said second separation device (251), preferably by means of a tank (280).

**15.** A plant as claimed in any one of claims 12 to 14, wherein first reduction zone (120, 220) is made up of a first reactor, reforming zone (130, 330, 530) and second reduction zone (140, 240, 340, 440) are both integrated in a second reactor (170, 270, 370, 470), and wherein said second reactor (170, 270, 370, 470) comprises vertical tubes (442) made of a thermally conductive material, such as metallic tubes, contiguous to the fixed bed and to a fluidized bed of second reduction zone (140, 240, 340, 440) for achieving a heat exchange between said fixed bed and said fluidized bed.

**16.** A plant as claimed in any one of claims 12 to 15, further comprising a collection zone (331) provided between the first reduction zone and reforming zone (330) for collecting the oxygen carrier fines carried along in gas stream (14), said collection zone (331) being preferably part of a reactor including second reduction zone (340), and said collection zone preferably comprising a truncated part whose vertex is in contact with reforming zone (330).

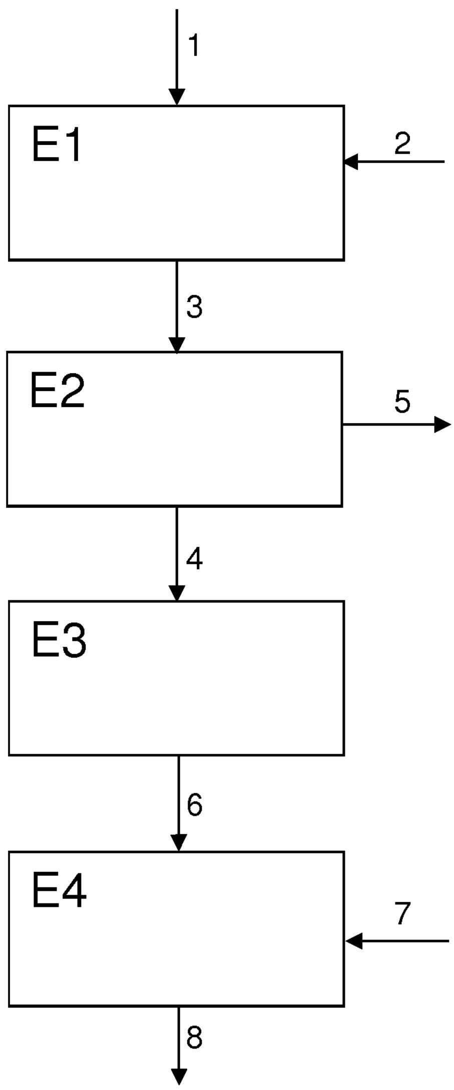


FIG. 1

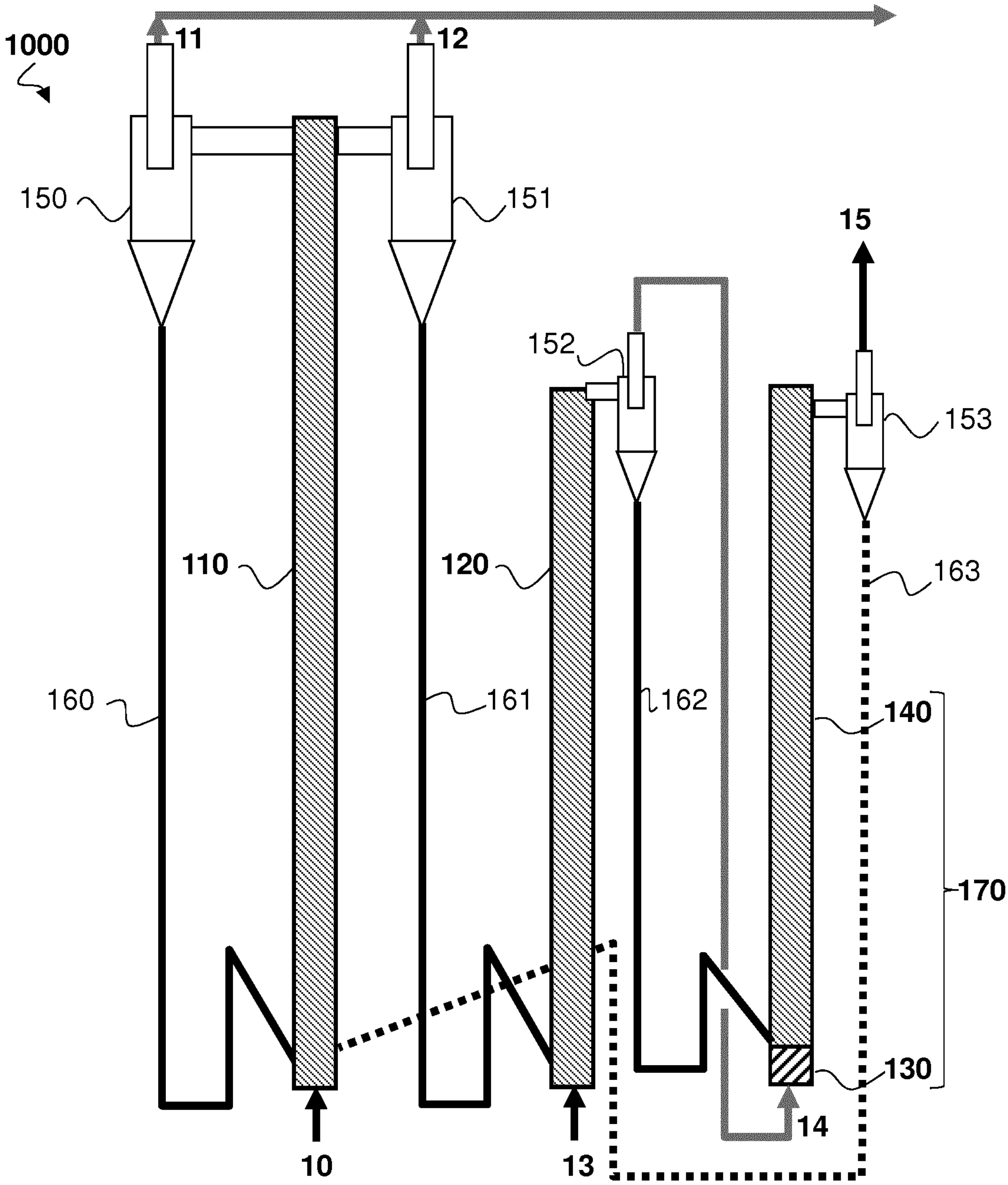
1000
11
12
150
151
15
152
153
110
120
163
160
161
162
140
170
130
14
10
13

FIG. 2

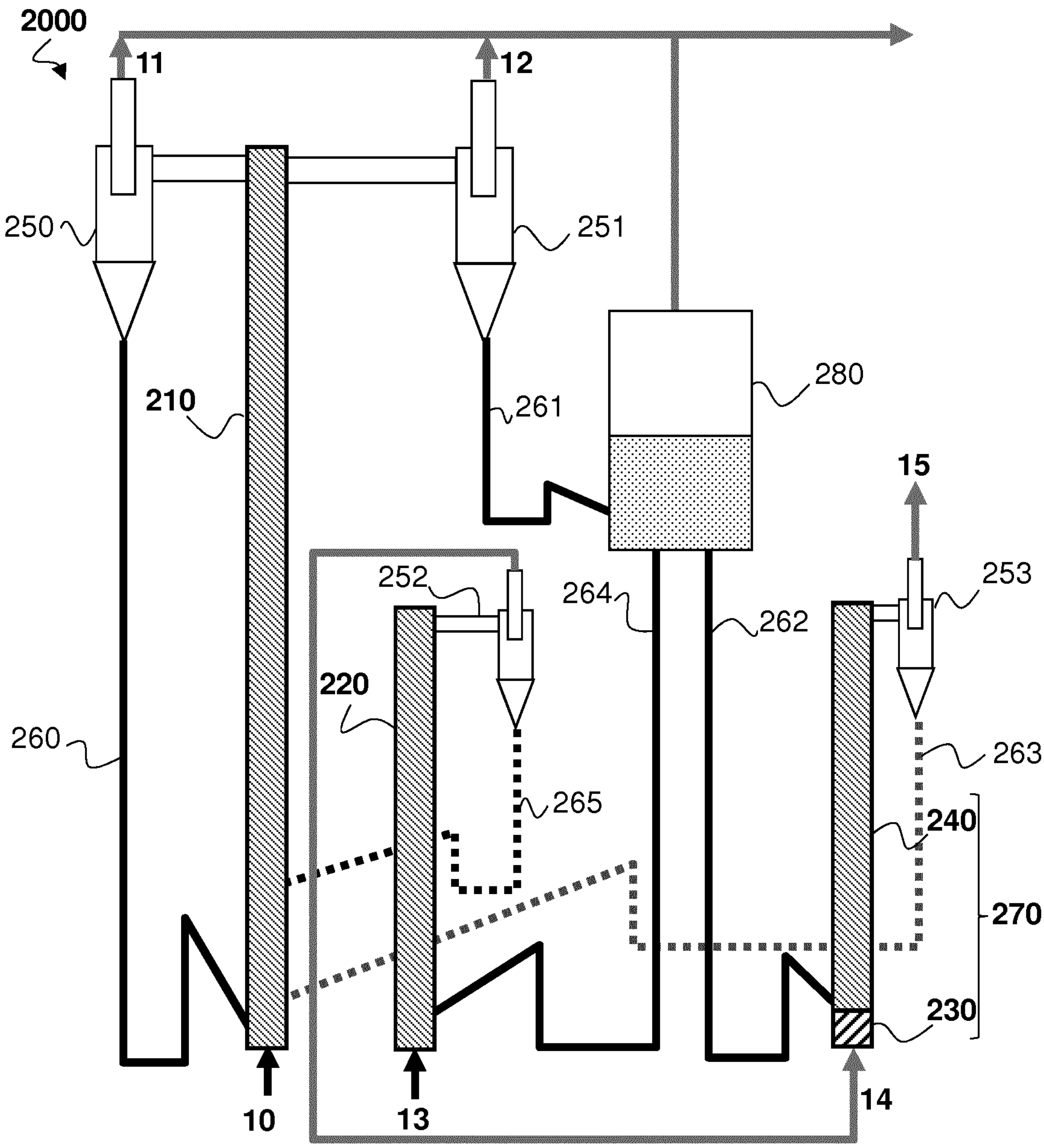
2000
11
12
250
251
210
261
280
15
252
264
262
253
220
263
260
265
240
270
230
10
13
14

FIG. 3

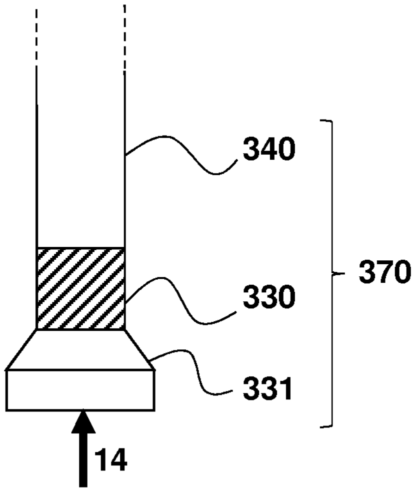


FIG. 4

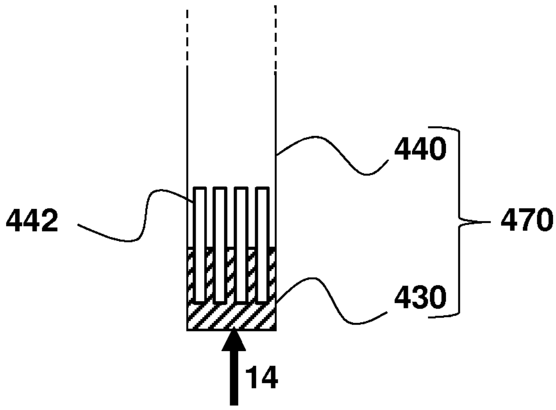


FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5447024 A
- US 2011303875 A
- WO 2014068205 A